# FASCICULE DE BREVET EUROPEEN

(11) **EP 1 890 581 B1**
(45) Date de publication et mention de la délivrance du brevet: **22.07.2009**
(21) Numéro de dépôt: 06743686.5
(22) Date de dépôt: 13.04.2006
(51) Int. Cl.: A47J 43/046

(54) **RECIPIENT DE TRAVAIL POUR APPAREIL ELECTROMENAGER DE PREPARATION CULINAIRE**
ARBEITSBEHÄLTER FÜR EIN HAUSHALTSGERÄT ZUR NAHRUNGSZUBEREITUNG
WORKING CONTAINER FOR A HOUSEHOLD APPLIANCE FOR CULINARY PURPOSES

(30) Priorité: 29.04.2005 FR 0504355
(43) Date de publication de la demande: 27.02.2008
(73) Titulaire: SEB SA, 69130 Ecully (FR)
(72) Inventeur: PERRIER, Matthieu, 65310 Laloubère (FR); ROUCHES, Alexandre, 65310 Horgues (FR)
(74) Mandataire: Kiehl, Hubert
(86) Numéro de dépôt international: PCT/FR2006/000811
(87) Numéro de publication internationale: WO 2006/117444

(56) Documents cités:
- US-A- 2 924 349
- US-A- 3 240 246
- US-A- 3 299 226
- US-A- 3 493 214
- US-A- 3 627 008
- US-A- 4 087 053
- US-A- 5 323 973

## Description

La présente invention concerne le domaine technique des appareils électroménagers de préparation culinaire prévus pour la réalisation de préparations à base liquide.

Il est connu du document US 4 487 509 un appareil électroménager de préparation culinaire comportant un outil de travail rotatif disposé dans un récipient de travail agencé sur un boîtier moteur, dans lequel le récipient de travail présente une seule ouverture. L'outil de travail rotatif est monté sur un support prévu pour former l'ouverture du récipient de travail. Le récipient de travail présente une protubérance prévue pour actionner un interrupteur agencé dans le boîtier moteur. Lorsque le récipient de travail est en place sur le boîtier moteur, l'interrupteur actionné par la protubérance permet le fonctionnement de l'appareil. Le récipient de travail mis en place sur le boîtier moteur présente une extrémité supérieure fermée et une forme tronconique. avec un diamètre rétrécissant vers l'extrémité supérieure. L'appareil proposé est particulièrement simple d'utilisation. Toutefois, la forme du récipient de travail s'avère peu satisfaisante pour certaines préparations, notamment le mélange de fruits ou de morceaux de fruits avec du yaourt.

Un appareil selon le préambule de la revendication 1 est connu du document US 3 627 008.

Un objet de la présente invention est de proposer un récipient de travail pour appareil électroménager de préparation culinaire, dans lequel le mélange d'une préparation à base liquide incorporant à l'origine des morceaux d'aliments est amélioré.

Un autre objet de la présente invention est de proposer un récipient de travail pour appareil électroménager de préparation culinaire, dans lequel le mélange d'une préparation à base liquide incorporant à l'origine des morceaux d'aliments est rendu plus homogène.

Un autre objet de la présente invention est de proposer un récipient de travail pour appareil électroménager de préparation culinaire, permettant de faciliter la consommation de la préparation.

Un autre objet de la présente invention est de proposer un récipient de travail pour appareil électroménager de préparation culinaire, dont le nettoyage est facilité.

Un autre objet de la présente invention est de proposer un récipient de travail pour appareil électroménager de préparation culinaire, présentant une construction économique.

Un autre objet de la présente invention est de proposer un récipient de travail pour appareil électroménager de préparation culinaire, présentant une construction compacte.

Un autre objet de la présente invention est de proposer un récipient de travail pour appareil électroménager de préparation culinaire, dont la préhension est facilitée.

Ces objets sont atteints avec un récipient de travail prévue pour être disposé sur un boîtier moteur d'appareil électroménager de préparation culinaire, ledit récipient de travail formant une enceinte de travail allongée selon une direction, l'enceinte de travail allongée comportant à une extrémité de ladite direction un outil de travail monté mobile en rotation, l'enceinte de travail allongée présentant selon ladite direction une section transversale interne variant en fonction de la distance à l'outil de travail, du fait que la section transversale interne de l'enceinte de travail allongée augmente selon ladite direction de part et d'autre d'un rétrécissement agencé entre 1/4 et 3/4 de la hauteur de l'enceinte de travail allongée définie selon ladite direction. En d'autres termes, le récipient de travail forme une enceinte de travail allongée selon une direction, l'enceinte de travail allongée présentant selon ladite direction une section transversale interne variable, l'enceinte de travail allongée comportant à une extrémité de ladite direction un outil de travail monté mobile en rotation, la section transversale interne de l'enceinte de travail allongée augmentant selon ladite direction de part et d'autre d'un rétrécissement agencé entre 1/4 et 3/4 de la hauteur de l'enceinte de travail atténuée, la hauteur de l'enceinte de travail allongée étant définie selon ladite direction. L'outil de travail monté mobile en rotation est prévu pour être entraîné par le boîtier moteur. Lorsque l'enceinte de travail allongée est disposée verticalement, le rétrécissement définit une chambre inférieure, dans laquelle est agencée l'outil de travail monté rotatif, et une chambre supérieure. La diminution de la section transversale interne de l'enceinte de travail allongée en direction du rétrécissement peut être très progressive. La rotation de l'outil de travail entraîne un effet de vortex qui contribue à augmenter le niveau du liquide sur les parois latérales internes de l'enceinte de travail allongée, tout en créant une dépression au centre. Lorsque l'enceinte de travail allongée contient une préparation liquide comportant de gros morceaux de fruits, la diminution de la section transversale interne gêne davantage les gros morceaux que le liquide ou les morceaux plus petits. De ce fait, les gros morceaux de fruits ont tendance à retomber plus rapidement sur l'outil de travail, alors qu'au moins une partie du liquide et des morceaux plus petits dépasse le rétrécissement et peut atteindre la chambre supérieure. Les gros morceaux sont ainsi mixés plus rapidement. L'homogénéité de la préparation est améliorée. De plus, la présence d'un rétrécissement facilite la préhension du récipient de travail. En outre, la taille de l'ouverture peut être réduite, ce qui permet de faciliter la consommation directe de la préparation dans le récipient de travail. L'utilisation d'un verre est ainsi évitée. Le récipient de travail proposé est bien adapté à une consommation individuelle.

Avantageusement alors, l'enceinte de travail allongée est dépourvue de nervure interne. Cette disposition contribue à simplifier la réalisation du récipient de travail en évitant les surépaisseurs internes. De plus, cette disposition permet de faciliter le nettoyage du récipient de travail.

Avantageusement encore, le rétrécissement affecte au moins 50% de la périphérie de l'enceinte de travail allongée. Cette disposition contribue à faciliter la réalisation du récipient de travail en évitant pour l'enceinte de travail l'utilisation de variations de forme brusques.

Avantageusement alors, le rétrécissement affecte le tour de la périphérie de l'enceinte de travail allongée. En d'autres termes, la paroi latérale interne de l'enceinte de travail allongée ne comporte pas de portion cylindrique au niveau du rétrécissement. Cette disposition contribue à faciliter la réalisation du récipient de travail en permettant notamment de conserver sensiblement la même géométrie pour la section transversale interne de l'enceinte de travail allongée, malgré la présence du rétrécissement.

Avantageusement encore, pour contribuer efficacement au mélange de la préparation, la section transversale interne de l'enceinte de travail allongée au niveau du rétrécissement est inférieure ou égale à 90% de la section transversale interne maximale de l'enceinte de travail allongée agencée entre l'outil de travail et le rétrécissement. De préférence, la section transversale interne de l'enceinte de travail allongée au niveau du rétrécissement est inférieure ou égale à 80% de la section transversale interne maximale de l'enceinte de travail allongée agencée entre l'outil de travail et le rétrécissement.

Avantageusement encore, pour un meilleur mélange de la préparation tout en conservant une construction compacte, le rétrécissement est agencé entre 1/3 et 2/3 de la hauteur de l'enceinte de travail allongée.

Selon une forme de réalisation avantageuse, l'enceinte de travail allongée présente un méplat latéral. Ce méplat permet de faciliter le mélange de la préparation en perturbant le mouvement du liquide entraîné par l'outil de travail. Si désiré, l'enceinte de travail allongée peut comporter plusieurs méplats latéraux. Avantageusement, l'enceinte de travail allongée comporte deux méplats latéraux agencés face à face.

Avantageusement encore, l'enceinte de travail allongée est étanche. En d'autres termes, lors de la réalisation de la préparation, l'introduction d'air et les fuites de liquide sont évitées. Cette disposition permet d'éviter la formation de mousse lors de la réalisation des préparations, notamment lors de la réalisation des préparations à base de yaourt.

Selon un mode de réalisation avantageux, l'enceinte de travail allongée est formée par un réceptacle comportant à une extrémité une ouverture fermée par un bouchon. Le bouchon peut être assemblé avec le réceptacle par exemple par vissage, ou par tout autre moyen approprié.

Avantageusement alors, l'outil de travail est monté sur le bouchon. Le nettoyage de l'outil de travail est ainsi particulièrement aisé. Plusieurs réceptacles peuvent être utilisés successivement avec le même outil de travail. Des bouchons additionnels de stockage adaptés aux réceptacles peuvent être envisagés pour conserver le contenu. En alternative, l'outil de travail peut notamment être monté sur le fond du réceptacle. Toutefois cette disposition complique la réalisation du réceptacle, ainsi que le nettoyage.

Avantageusement encore le réceptacle présente une paroi latérale susceptible d'être déformée élastiquement lors de la préhension du réceptacle, notamment lors d'une pression radiale locale. Cette disposition permet de rendre la préhension du réceptacle plus confortable.

Avantageusement encore, le réceptacle présente une seule ouverture. Le réceptacle forme alors une bouteille. La réalisation du réceptacle est particulièrement économique. L'utilisation de plusieurs réceptacles peut être envisagée sans coûts excessifs.

Avantageusement encore, le réceptacle est réalisé en une seule pièce. Le réceptacle peut être réalisé par exemple par extrusion-soufflage. Une telle réalisation est particulièrement économique.

En alternative, le réceptacle peut présenter notamment une autre ouverture à l'autre extrémité, fermée par un autre bouchon. Le réceptacle comporte ainsi un fond amovible.

Avantageusement encore le réceptacle comporte une protubérance externe agencée latéralement par rapport à l'ouverture. Cette protubérance peut être utilisée pour commander le bloc moteur de l'appareil utilisé avec le récipient de travail.

Avantageusement encore l'outil de travail est non coupant. Cette disposition permet notamment de limiter les risques de blessure lors du nettoyage ou du démontage du récipient de travail.

Les objets assignés à l'invention sont atteints également avec un appareil électroménager de préparation culinaire comprenant un boîtier moteur prévu pour recevoir un récipient de travail formant une enceinte de travail allongée comportant à une extrémité un outil de travail monté mobile en rotation, du fait que le récipient de travail est conforme à l'une des caractéristiques précédentes.

L'invention sera mieux comprise à l'étude d'un exemple de réalisation, pris à titre nullement limitatif, illustré dans les figures annexées, dans lesquelles :
- la figure 1 est une vue en perspective éclatée d'un boîtier moteur et d'un récipient de travail selon l'invention, le récipient de travail comportant un réceptacle et un bouchon,
- la figure 2 est une vue de côté éclatée du boîtier moteur et du récipient de travail représentés à la figure 1,
- la figure 3 est une vue de face éclatée du boîtier moteur et du récipient de travail représentés aux figures 1 et 2, le boîtier moteur et le bouchon étant représentés en coupe partielle,
- la figure 4 est une vue en perspective du bouchon visible aux figures 1 à 3,
- la figure 5 est une vue en coupe de face retournée du réceptacle visible aux figures 1 à 3,
- la figure 6 est une vue en coupe de côté retournée du réceptacle visible aux figures 1 à 3.

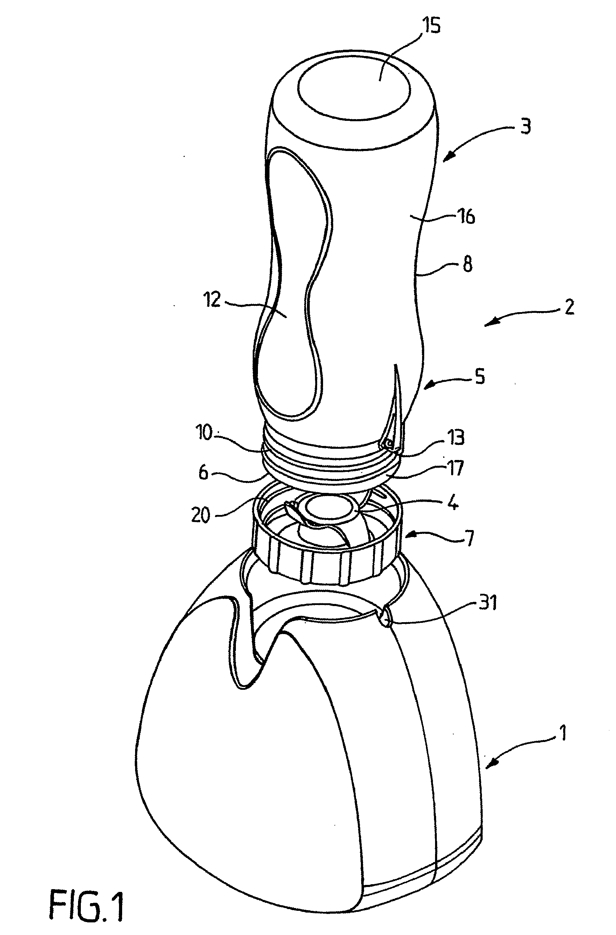

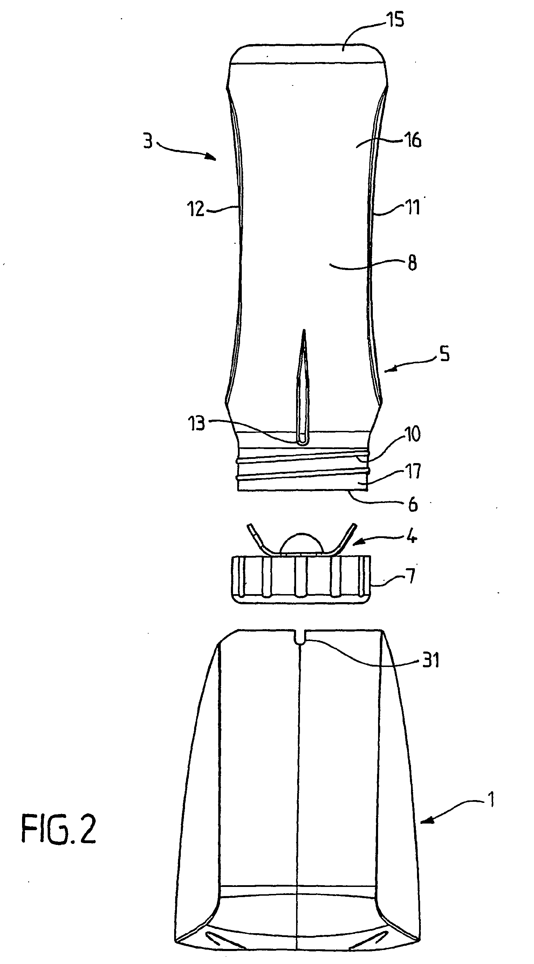

L'appareil électroménager de préparation culinaire illustré aux figures 1 à 3 comporte un boîtier moteur 1 et un récipient de travail 2 prévu pour être disposé sur le boîtier moteur 1. Le récipient de travail 2 forme une enceinte de travail allongée 3. L'enceinte de travail allongée 3 comporte à une extrémité un outil de travail 4 monté mobile en rotation.

L'enceinte de travail allongée 3 présente une section transversale interne augmentant de part et d'autre d'un rétrécissement 8 agencé entre 1/4 et 3/4 de la hauteur de l'enceinte de travail allongée 3. De préférence le rétrécissement 8 est agencé entre 1/3 et 2/3 de la hauteur de l'enceinte de travail allongée. Tel qu'illustré aux figures, le rétrécissement 8 est disposé sensiblement à mi-hauteur de l'enceinte de travail allongée 3.

Tel que bien visible sur les figures 1 à 3, l'enceinte de travail allongée 3 présente une section transversale interne variant en fonction de la distance à l'outil de travail 4.

Ainsi, tel que visible sur les figures, l'enceinte de travail allongée 3 est allongée selon une direction, l'enceinte de travail allongée 3 présentant selon ladite direction une section transversale interne variable, l'enceinte de travail allongée 3 comportant à une extrémité de ladite direction l'outil de travail 4 monté mobile on rotation, la section transversale interne de l'enceinte de travail allongée 3 augmentant selon ladite direction de part et d'autre du rétrécissement 8 agencé entre 1/1 et 3/4 de la hauteur de l'enceinte de travail allongée, la hauteur de l'enceinte de travail allongée 3 étant définie selon ladite direction.

Lorsque l'enceinte de travail allongée 3 est disposée en position retournée, tel que représenté aux figures 1 à 3, le rétrécissement 8 définit une chambre inférieure, dans laquelle est agencée l'outil de travail 4, et une chambre supérieure. Le rétrécissement 8 est agencé entre la chambre inférieure et la chambre supérieure.

La section transversale interne de l'enceinte de travail allongée 3 diminue à l'approche de chacune des extrémités.

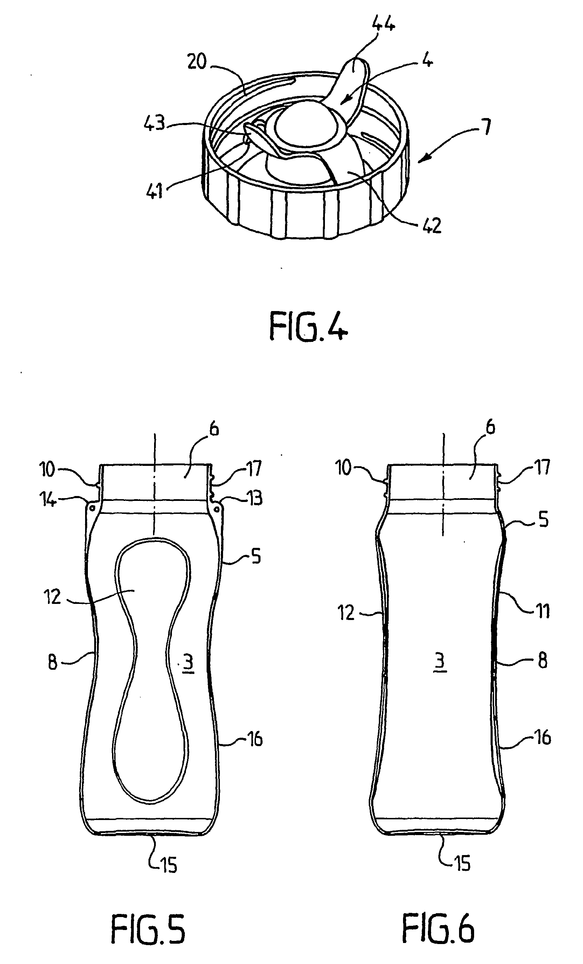

La section transversale interne de l'enceinte de travail allongée 3 au niveau du rétrécissement 8 est avantageusement inférieure ou égale à 90% de la section transversale interne maximale de l'enceinte de travail allongée 3 agencée entre l'outil de travail 4 et le rétrécissement 8, et de préférence inférieure ou égale à 80% de la section transversale interne maximale de l'enceinte de travail allongée 3 agencée entre l'outil de travail 4 et le rétrécissement 8. Tel que montré aux figures 5 et 6, la section transversale interne de l'enceinte de travail allongée 3 au niveau du rétrécissement 8 est proche de 70% de la section transversale interne maximale de l'enceinte de travail allongée 3 agencée entre l'outil de travail 4 et le rétrécissement 8.

Le rétrécissement 8 s'étend sur le tour de la périphérie de l'enceinte de travail allongée 3. La largeur de l'enceinte de travail allongée 3 au niveau du rétrécissement 8 est avantageusement inférieure à la moitié de la hauteur de l'enceinte de travail allongée 3. Tel que montré aux figures 5 et 6, la largeur de l'enceinte de travail allongée 3 au niveau du rétrécissement 8 est proche du tiers de la hauteur de l'enceinte de travail allongée 3.

L'enceinte de travail allongée 3 comporte deux méplats latéraux 11, 12 agencés face à face. Les méplats latéraux 11, 12 présentent une forme en 8. L'enceinte de travail allongée 3 est dépourvue de nervure interne.

L'enceinte de travail allongée 3 est formée par un réceptacle 5 comportant une ouverture 6 fermée par un bouchon 7. L'enceinte de travail allongée 3 formée par le réceptacle 5 assemblé avec le bouchon 7 est étanche. Le réceptacle 5 présente un pas de vis externe 10 prévu pour recevoir un pas de vis interne 20 ménagé dans le bouchon 7. L'outil de travail 4 est monté sur le bouchon 7.

Le réceptacle 5 présente une seule ouverture 6, formant l'ouverture de remplissage ou de versement de l'enceinte de travail allongée 3. Le rétrécissement 8 et les méplats latéraux sont ménagés sur le réceptacle 5. L'ouverture 6 présente avantageusement une taille juste suffisante pour permettre l'introduction directe d'un yaourt figé entier. Dans l'exemple de réalisation illustré aux figures, l'ouverture 6 présente une largeur de 55 mm.

Le réceptacle 5 comporte deux protubérances externes 13, 14 agencées latéralement par rapport à l'ouverture 6. Le réceptacle 5 présente un fond 15 et une paroi latérale 16 terminée par un goulot 17. Les protubérances externes 13, 14 sont agencées sur la paroi latérale 16 près du goulot 17. Le pas de vis externe 10 est agencé sur le goulot 17.

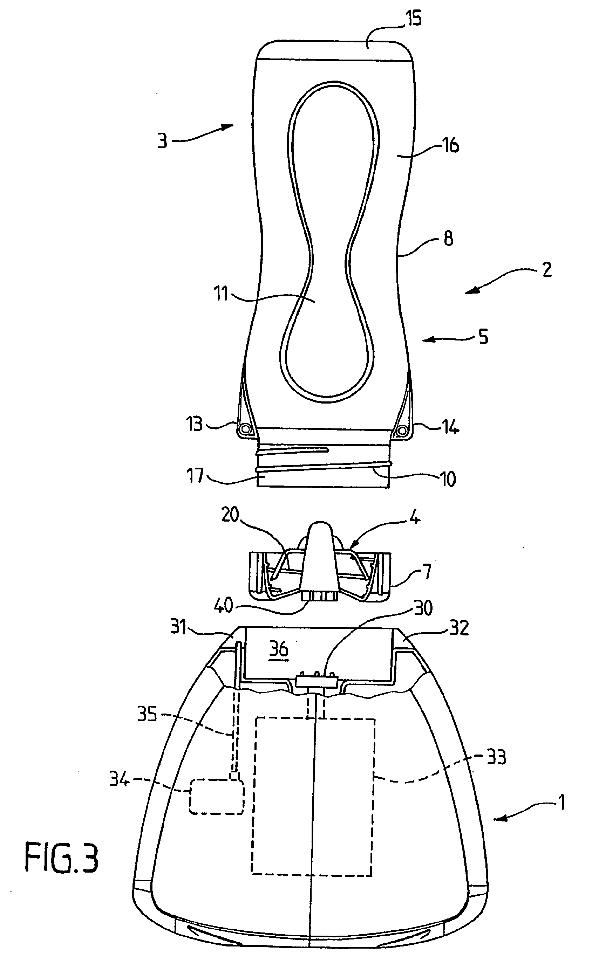

Les protubérances externes 13, 14 sont prévues pour être engagées dans des échancrures 31, 32 du boîtier moteur 1. Tel que visible à la figure 3, le boîtier moteur 1 comporte un moteur 33 commandé par un interrupteur 34. Une tige 35 émergeant dans l'échancrure 31 peut actionner l'interrupteur 34 lorsque le réceptacle 5 est mis en place sur le boîtier moteur 1.

Le réceptacle 5 est réalisé en une seule pièce. Du fait de l'absence de nervure interne, et de la faible épaisseur des protubérances externes 13, 14, le réceptacle 5 peut être avantageusement réalisé par extrusion-soufflage. De ce fait, la paroi latérale 16 peut être réalisée en matériau relativement souple. Ainsi la paroi latérale 16 est susceptible d'être déformée élastiquement lors de la préhension du réceptacle 5.

L'outil de travail 4 est non coupant. Tel que mieux visible à la figure 4, l'outil de travail 4 comporte deux lames 41, 42 inclinées vers le bas et deux lames 43, 44 inclinées vers le haut. L'outil de travail 4 est monté sur un axe présentant une conformation d'entraînement 40, visible sur la figure 3. Le moteur 33 est relié à une sortie d'entraînement 30 prévue pour coopérer avec la conformation d'entraînement 40 lorsque le récipient de travail 2 est en place sur le boîtier moteur 1. La sortie d'entraînement 30 est agencée au fond d'un logement 36 du boîtier moteur 1. Le logement 36 est disposé entre les échancrures 31, 32.

Le fonctionnement de la présente invention est le suivant.

L'utilisateur remplit le réceptacle 5 avec les ingrédients désirés, par exemple un yaourt nature et des fruits en morceaux. L'utilisateur ferme le réceptacle 5 avec le bouchon 7 pour obtenir une enceinte de travail allongée 3 fermée. L'utilisateur retourne ensuite l'enceinte de travail allongée 3 et insère les protubérances externes 13, 14 dans les échancrures 31, 32 du boîtier moteur 1. Le bouchon 7 entre dans le logement 36 et la conformation d'entraînement 40 s'engrène avec la sortie d'entraînement 30. L'une des protubérances externes 13, 14 repousse ensuite la tige 35. L'interrupteur 34 autorise alors le fonctionnement du moteur 33.

Les ingrédients présents dans l'enceinte de travail allongée 3 sont alors entraînés par l'outil de travail 4. La partie liquide ainsi que les petits morceaux sont propulsés au dessus du rétrécissement 8 par l'effet de vortex. Les morceaux de taille plus importante sont déviés par la partie de la paroi interne de l'enceinte de travail allongée 3 disposée en dessous du rétrécissement 8 et retombent sur l'outil de travail 4, favorisant ainsi leur déchiquetage. Les méplats latéraux 11, 12 favorisent l'homogénéisation du mélange.

Lorsque la préparation est réalisée, l'utilisateur retire l'enceinte de travail allongée 3 du boîtier moteur 1, retourne l'enceinte de travail allongée 3, et enlève le bouchon 7. L'utilisateur peut alors remplacer le bouchon 7 par un autre bouchon dépourvu de lames, ou boire directement le contenu du réceptacle 5.

Le récipient de travail et l'appareil électroménager de préparation culinaire proposés sont ainsi d'une utilisation particulièrement conviviale.

A titre de variante, le rétrécissement n'affecte pas nécessairement le tour de la périphérie de l'enceinte de travail allongée. Une partie de la périphérie de l'enceinte de travail allongée peut notamment être cylindrique. De préférence, le rétrécissement affecte au moins 50% de la périphérie de l'enceinte de travail allongée.

A titre de variante, pour faciliter le mélange de la préparation, l'enceinte de travail allongée peut présenter un seul méplat latéral, ou plus de deux méplats latéraux.

A titre de variante, le réceptacle peut présenter une autre ouverture, notamment à l'autre extrémité, fermée par un autre bouchon. Cette disposition peut contribuer à faciliter la réalisation et/ou le nettoyage du réceptacle.

A titre de variante le réceptacle peut ne comporter qu'une seule protubérance externe agencée latéralement par rapport à l'ouverture, ou au contraire, plus de deux protubérances.

A titre de variante, l'outil de travail peut notamment être monté sur le fond du réceptacle.

A titre de variante, le récipient de travail peut notamment être réalisé en injection-soufflage. D'autres matières que les matières plastiques peuvent toutefois être envisagées pour réaliser le récipient de travail, notamment le métal ou le verre. Si désiré un ou des revêtements peuvent être prévus.

La présente invention n'est nullement limitée à l'exemple de réalisation décrit et à ses variantes, mais englobe de nombreuses modifications dans le cadre des revendications.

## Revendications

1. Récipient de travail prévu pour être disposé sur un boîtier moteur d'appareil électroménager de préparation culinaire, ledit récipient de travail formant une enceinte de travail allongée (3) selon une direction, l'enceinte de travail allongée (3) comportant à une extrémité de ladite direction un outil de travail (4) monté mobile en rotation, l'enceinte de travail allongée (3) présentant selon ladite direction une section tranversale interne variant en fonction de la distance à l'outil de travail (4), **caractérisé en ce que** la section transversale interne de l'enceinte de travail allongée (3) augmente selon ladite direction de part et d'autre d'un rétrécissement (8) agencé entre 1/4 et 3/4 de la hauteur de l'enceinte de travail allongée (3) définie selon ladite direction.

2. Récipient de travail selon la revendication 1, **caractérisé en ce que** l'enceinte de travail allongée (3) est dépourvue de nervure interne.

3. Récipient de travail selon l'une des revendications 1 ou 2, **caractérisé en ce que** le rétrécissement (8) affecte au moins 50% de la périphérie de l'enceinte de travail allongée (3).

4. Récipient de travail selon la revendication 3, **caractérisé en ce que** le rétrécissement (8) affecte le tour de la périphérie de l'enceinte de travail allongée (3).

5. Récipient de travail selon l'une des revendications 1 à 4, **caractérisé en ce que** la section transversale interne de l'enceinte de travail allongée (3) au niveau du rétrécissement (8) est inférieure ou égale à 90% de la section transversale interne maximale de l'enceinte de travail allongée (3) agencée entre l'outil de travail (4) et le rétrécissement (8) et de préférence inférieure ou égale à 80% de la section transversale interne maximale de l'enceinte de travail allongée (3) agencée entre l'outil de travail (4) et le rétrécissement (8).

6. Récipient de travail selon l'une des revendications 1 à 4, **caractérisé en ce que** le rétrécissement (8) est agencé entre 1/3 et 2/3 de la hauteur de l'enceinte de travail allongée. (3).

7. Récipient de travail selon l'une des revendications 1 à 6, **caractérisé en ce que** l'enceinte de travail allongée (3) présente un méplat latéral (11 ; 12).

8. Récipient de travail selon l'une des revendications 1 à 7, **caractérisé en ce que** l'enceinte de travail allongée (3) est étanche.

9. Récipient de travail selon l'une des revendications 1 à 8, **caractérisé en ce que** l'enceinte de travail allongée (3) est formée par un réceptacle (5) comportant à une extrémité une ouverture (6) fermée par un bouchon (7).

10. Récipient de travail selon la revendication 9, **caractérisé en ce que** l'outil de travail (4) est monté sur le bouchon (7).

11. Récipient de travail selon l'une des revendications 9 ou 10, **caractérisé en ce que** le réceptacle (5) présente une paroi latérale (16) susceptible d'être déformée lors de la préhension du réceptacles (5).

12. Récipient de travail selon l'une des revendications 9 à 11, **caractérisé en ce que** le réceptacle (5) présente une seule ouverture (6).

13. Récipient de travail selon l'une des revendications 9 à 12, **caractérisé en ce que** le réceptacle (5) est réalisé en une seule pièce.

14. Récipient de travail selon l'une des revendications 9 à 13, **caractérisé en ce que** le réceptacle (5) comporte une protubérance externe (13 ; 14) agencée latéralement par rapport à l'ouverture (6).

15. Récipient de travail selon l'une des revendications 1 à 14, **caractérisé en ce que** l'outil de travail (4) est non coupant.

16. Appareil électroménager de préparation culinaire comprenant un boîtier moteur (1) prévu pour recevoir un récipient de travail (2) formant une enceinte de travail allongée (3) comportant à une extrémité un outil de travail (4) monté mobile en rotation, **caractérisé en ce que** le récipient de travail (2) est conforme à l'une des revendications 1 à 15.

## Claims

1. A work receptacle designed to be placed on a motor housing of a household electrical appliance for preparing food, said work receptacle forming a work enclosure (3) that is elongate along an axis, which elongate work enclosure (3) has a work tool (4) at one end, which work tool is mounted to move in rotation, the elongate work enclosure (3) having an inside cross-section that varies along said axis as a function of distance to the work tool (4), said work receptacle being **characterized in that** the inside cross-section of the elongate work enclosure (3) increases along said axis on either side of a neck (8) arranged between ¼ of the height of the elongate work enclosure (3) and ¾ of the height thereof, the height being defined along said axis.

2. A work receptacle according to claim 1, **characterized in that** the elongate work enclosure (3) is not provided with any internal rib.

3. A work receptacle according to claim 1 or claim 2, **characterized in that** the neck (8) affects at least 50% of the periphery of the elongate work enclosure (3).

4. A work receptacle according to claim 3, **characterized in that** the neck (8) affects the girth of the elongate work enclosure (3).

5. A work receptacle according to any one of claims 1 to 4, **characterized in that** the inside cross-section of the elongate work enclosure (3) at the neck (8) is less than or equal to 90% of the maximum inside cross-section of the elongate work enclosure (3) arranged between the work tool (4) and the neck (8), and preferably less than or equal to 80% of the maximum inside cross-section of the elongate work enclosure (3) arranged between the work tool (4) and the neck (8).

6. A work receptacle according to any one of claims 1 to 4, **characterized in that** the neck (8) is arranged between ⅓ of the height of the elongate work enclosure (3) and ²/₃ of the height thereof.

7. A work receptacle according to any one of claims 1 to 6, **characterized in that** the elongate work enclosure (3) has a side flat (11; 12).

8. A work receptacle according to any one of claims 1 to 7, **characterized in that** the elongate work enclosure (3) is leaktight.

9. A work receptacle according to any one of claims 1 to 8, **characterized in that** the elongate work enclosure (3) is formed by a container (5) having an opening (6) closed by a cap (7) at one end.

10. A work receptacle according to claim 9, **characterized in that** the work tool (4) is mounted in the cap (7).

11. A work receptacle according to claim 9 or claim 10, **characterized in that** the container (5) has a side wall (16) that is suitable for being deformed on taking hold of the container (5).

12. A work receptacle according to any one of claims 9 to 11, **characterized in that** the container (5) is provided with a single opening (6).

13. A work receptacle according to any one of claims 9 to 12, **characterized in that** the container (5) is made in one piece.

14. A work receptacle according to any one of claims 9 to 13, **characterized in that** the container (5) is provided with an external protuberance (13; 14) arranged laterally relative to the opening (6).

15. A work receptacle according to any one of claims 1 to 14, **characterized in that** the work tool (4) is not sharp.

16. A household electrical appliance for preparing food, said appliance having a motor housing (1) designed to receive a work receptacle (2) forming an elongate work enclosure (3) having a work tool (4) at one end, which tool is mounted to move in rotation, said household electrical appliance being **characterized in that** the work receptacle (2) is a work receptacle according to any one of claims 1 to 15.

## Patentansprüche

1. Arbeitsbehälter, der dazu vorgesehen ist, auf dem Motorgehäuse eines Elektrohaushaltsgeräts zur Nahrungszubereitung angeordnet zu sein, wobei der Arbeitsbehälter einen gemäß einer Richtung langgestreckten Arbeitsraum (3) bildet, wobei der langgestreckte Arbeitsraum (3) an einem Ende der Richtung ein Arbeitswerkzeug (4) aufweist, das drehbeweglich angebracht ist, wobei der langgestreckte Arbeitsraum (3) gemäß der Richtung einen Innenquerschnitt aufweist, der in Abhängigkeit vom Abstand zum Arbeitswerkzeug (4) variiert, **dadurch gekennzeichnet, dass** der Innenquerschnitt des langgestreckten Arbeitsraums (3) gemäß der Richtung auf der einen und der anderen Seite einer Verengung (8) zunimmt, die zwischen 1/4 und 3/4 der Höhe des gemäß der Richtung definierten langgestreckten Arbeitsraums (3) angeordnet ist.

2. Arbeitsbehälter nach Anspruch 1, **dadurch gekennzeichnet, dass** der langgestreckte Arbeitsraum (3) keine Innenrippe aufweist.

3. langgestreckte Arbeitsraum (3) nach einem der Ansprüche 1 oder 2, **dadurch gekennzeichnet, dass** die Verengung (8) auf mindestens 50% des Umfangs des langgestreckten Arbeitsraums (3) vorgesehen ist.

4. Arbeitsbehälter nach Anspruch 3, **dadurch gekennzeichnet, dass** die Verengung (8) auf dem Umfang des langgestreckten Arbeitsraums (3) vorgesehen ist.

5. Arbeitsbehälter nach einem der Ansprüche 1 bis 4, **dadurch gekennzeichnet, dass** der Innenquerschnitt des langgestreckten Arbeitsraums (3) auf der Höhe der Verengung (8) kleiner als oder gleich 90% des maximalen Innenquerschnitts des langgestreckten Arbeitsraums (3) ist, der zwischen dem Arbeitswerkzeug (4) und der Verengung (8) angeordnet ist, und vorzugsweise kleiner als oder gleich 80% des maximalen Innenquerschnitts des langgestreckten Arbeitsraums (3) ist, der zwischen dem Arbeitswerkzeug (4) und der Verengung (8) angeordnet ist.

6. Arbeitsbehälter nach einem der Ansprüche 1 bis 4, **dadurch gekennzeichnet, dass** die Verengung (8) zwischen 1/3 und 2/3 der Höhe des langgestreckten Arbeitsraums (3) angeordnet ist.

7. Arbeitsbehälter nach einem der Ansprüche 1 bis 6, **dadurch gekennzeichnet, dass** der langgestreckte Arbeitsraum (3) eine seitliche Abflachung (11; 12) aufweist.

8. Arbeitsbehälter nach einem der Ansprüche 1 bis 7, **dadurch gekennzeichnet, dass** der langgestreckte Arbeitsraum (3) dicht ist.

9. Arbeitsbehälter nach einem der Ansprüche 1 bis 8, **dadurch gekennzeichnet, dass** der langgestreckte Arbeitsraum (3) durch ein Behältnis (5) gebildet ist, das an einem Ende eine Öffnung (6) aufweist, die von einem Deckel (7) verschlossen ist.

10. Arbeitsbehälter nach Anspruch 9, **dadurch gekennzeichnet, dass** das Arbeitswerkzeug (4) am Deckel (7) angebracht ist.

11. Arbeitsbehälter nach einem der Ansprüche 9 oder 10, **dadurch gekennzeichnet, dass** das Behältnis (5) eine Seitenwand (16) aufweist, die beim Greifen des Behältnisses (5) verformbar ist.

12. Arbeitsbehälter nach einem der Ansprüche 9 bis 11, **dadurch gekennzeichnet, dass** das Behältnis (5) eine einzige Öffnung (6) aufweist.

13. Arbeitsbehälter nach einem der Ansprüche 9 bis 12, **dadurch gekennzeichnet, dass** das Behältnis (5) einstückig ausgeführt ist.

14. Arbeitsbehälter nach einem der Ansprüche 9 bis 13, **dadurch gekennzeichnet, dass** das Behältnis (5) einen äußeren Ansatz (13; 14) aufweist, der seitlich zur Öffnung (6) angeordnet ist.

15. Arbeitsbehälter nach einem der Ansprüche 1 bis 14, **dadurch gekennzeichnet, dass** das Arbeitswerkzeug (4) nicht schneidend ist.

16. Elektrohaushaltsgerät zur Nahrungszubereitung, mit einem Motorgehäuse (1), das dazu vorgesehen ist, einen Arbeitsbehälter (2) aufzunehmen, der einen langgestreckten Arbeitsraum (3) bildet, der an einem Ende ein drehbeweglich angebrachtes Arbeitswerkzeug (4) aufweist, **dadurch gekennzeichnet, dass** der Arbeitsbehälter (2) gemäß einem der Ansprüche 1 bis 15 ausgebildet ist.
